# EUROPÄISCHE PATENTANMELDUNG

(11) **EP 0 922 383 A1**
(43) Veröffentlichungstag der Anmeldung: **16.06.1999**
(21) Anmeldenummer: 98120092.6
(22) Anmeldetag: 24.10.1998
(51) Int. Cl.: A01K 5/02

(54) **Hochdruck-Flüssigfütterungsanlage**

(30) Priorität: 10.12.1997 DE 29721801 U
(71) Anmelder: TEWE-Elektronic, Bernhard Wesseler, 48691 Vreden (DE)
(72) Erfinder: Wesseler, Bernhard, 48691 Vreden (DE)

(57) **Zusammenfassung**

Die Erfindung bezieht sich auf eine Flüssigfütterungsanlage, mit einer Rohrleitung, und mit Ventilen an den einzelnen Fütterungsstellen, und mit einer Pumpe, wobei die Pumpe als Hochdruckpumpe zur Erzeugung eines Druckes von wenigstens etwa 20 bar ausgestaltet ist und die Rohrleitung entsprechend druckfest ausgebildet ist und die Ventile ebenfalls entsprechend druckfest ausgestaltet sind, wobei die Rohrleitung einen Innendurchmesser von etwa 10 - 20 mm aufweist.

## Beschreibung

Die Erfindung betrifft eine Flüssigfütterungsanlage nach dem Oberbegriff des Anspruches 1.

Derartige Anlagen sind aus der Praxis vielfach bekannt. Dabei wird das Futter nach der Zubereitung und Anmischung mittels Pumpen bei vergleichsweise niedrigen Drücken von etwa 3 bis 5 bar durch Rohrleitungen geführt, die üblicherweise aus Kunststoff bestehen und Durchmesser von beispielsweise 50 oder 63 mm aufweisen. Automatische Membranventile dosieren die Futtermenge an der jeweiligen Fütterungsstelle.

Um das Futter pumpfähig anzumischen, enthält es einen vergleichsweise hohen Wasseranteil. Es ist daher bei den bekannten Flüssigfütterungsanlagen nachteilig, daß das Futter während der Fütterungspausen im Rohr steht., da das Futter dann ggf. gären kann.

Es ist bekannt, das Futter mit Hilfe einer Wassersäule aus der Rohrleitung zu drücken, um derartige Gärprozesse zu vermeiden. Dieses Wasser jedoch muß aus hygienischen Gründen schnellstmöglich einem neuen Mischprozeß zum Bereiten neuer Futtermengen zugeführt werden, was oft mit Schwierigkeiten verbunden ist, weil die große Wassermenge für die nächste Mischung nicht in vollem Umfang gebraucht wird. Sobald das Wasser über eine bestimmte Zeit nicht verarbeitet wird, entsteht in witterungsabhängig unterschiedlichen Zeiträumen auch hier die Gefahr einer unerwünschten Keimbildung.

Ein weiterer Nachteil der bekannten Flüssigfütterungsanlagen ist, daß die Mindestmenge an anzumischendem Futter vergleichsweise groß ist, so daß kleine spezialisierte Fütterungsgaben beispielsweise zur Verabreichung von Medikamenten in der Praxis häufig nicht oder nur unbefriedigend durchgeführt werden können.

Der Erfindung liegt die Aufgabe zugrunde, eine gattungsgemäße Flüssigfütterungsanlage dahingehend zu verbessern, daß die Anmischung auch kleiner Futtermengen problemlos möglich ist und die Verarbeitung von in der Rohrleitung verbleibendem Restfutter oder restlichem Brauchwasser problemlos innerhalb hygienisch unbedenklicher kurzer Zeitspannen ermöglicht wird

Diese der Erfindung zugrundeliegende Aufgabe wird durch eine Flüssigfütterungsanlage mit den Merkmalen des Anspruchs 1 gelöst.

Die Erfindung schlägt mit anderen Worten vor, ein Hochdrucksystem zu verwenden, bei dem die Rohrleitung einen vergleichsweise kleinen Innendurchmesser aufweist. Der Querschnitt eines Rohres mit beispielsweise 15 mm Innendurchmesser beträgt weniger als 7 % von dem Querschnitt eines Rohres mit 57 mm Innendurchmesser, so daß die im Rohr enthaltene Brauchwasser- bzw. Futtermenge durch die Verwendung dünnerer Rohrleitungen drastisch reduziert werden kann.

Eine im Rohr befindliche Brauchwassermenge ist daher neuerungsgemäß derart klein, daß sie problemlos vollständig beim Anmischen neuer Futtermengen Verwendung finden kann. Verleichbares gilt für in der Rohrleitung befindliche Restfuttermengen, wenn ohne derartige Wassersäulen gearbeitet wird: Auch diese Restfuttermengen können innerhalb kürzester Zeit verfüttert werden.

Durch den vergleichsweise geringen Rohrquerschnitt steigt der Widerstand bei der Förderung des Futters durch das Rohr an, so daß gegenüber den derzeit verwendeten Pumpen Hochdruckpumpen mit einem Druck von etwa 20 bar oder mehr, beispielsweise bis zu 200 bar, Verwendung finden können. An diese hohen Drücke angepaßt müssen selbstverständlich die Rohrleitungen sein, so daß beispielsweise Rohrleitungen aus Metall Verwendung finden können. Ebenso sind an diese hohen Drücke angepaßte Ventile zu verwenden, die zu den Abzweigungen an den einzelnen Fütterungsstellen führen.

Um das Verspritzen des Futters an den Fütterungsstellen zu vermeiden, kann das Futter aus der unter hohem Druck stehenden Rohrleitung vorteilhaft zunächst in einen Entspannungsbehälter geführt werden, aus dessen Auslaß dann das Futter in den eigentlichen Futtertrog geleitet wird. Durch die hohe Fördergeschwindigkeit des Futters ergibt sich trotz des kleineren Rohrquerschnittes eine etwa gleiche Dauer für den Fütterungsvorgang, so daß für die Tiere einerseits und für den betrieblichen Ablauf andererseits keine Umstellungsschwierigkeiten bestehen.

Um die Hochdruckpumpen zuverlässig betreiben zu können, kann vorteilhaft eine Passiervorrichtung oder Zerkleinerungs- bzw. Homogenisierungseinrichtung vorgesehen sein, die der Pumpe vorgeschaltet ist und die das angemischte Futter von Verunreinigungen oder Beimischungen unerwünscht großer Durchmesser befreit, indem sie diese stückigen Beimischungen entweder zerkleinert oder zurückhält, so daß insgesamt ein störungsfreier Betrieb der gesamten Fütterungsanlage sichergestellt ist.

Weiterhin kann insbesondere bei Verwendung metallischer Rohrleitungen vorteilhaft vorgesehen sein, diese Rohrleitungen elektrisch zu beheizen, so daß witterungsunabhängig eine optimale Funktionsfähigkeit der gesamten Fütterungsanlage gewährleistet werden kann. Diese Beheizung kann vorteilhaft abschnittsweise einzeln ein- oder ausgeschaltet bzw. in ihrer Intensität regelbar sein, so daß mit optimal geringem Energieeinsatz die Funktionsfähigkeit der Flüssigfütterungsanlage auch bei niedrigen Temperaturen sichergestellt sein kann. Auch ohne eine derartige Beheizung sind eingefrorene Futterleitungen aufgrund ihres kleinen Durchmessers und insbesondere bei der Verwendung metallischer Rohre mittels eines Gebläses oder ähnlicher Hilfsmittel leichter aufzutauen als die aus der Praxis bekannten großvolumigen Kunststoff-Rohrleitungen.

Die erfindungsgemäße Flüssigfütterungsanlage erlaubt eine hochexakte Dosierung der Futtermenge, da der Rohrinhalt minimiert wird. Ungenauigkeiten, die sich durch die Kompression des Futters innerhalb des Rohrinhaltes ergeben, werden auf diese Weise erheblich verringert bzw. gänzlich ausgeschlossen.

Die Zuteilung kleinerer Futtermengen in entfernt liegenden Stellen wird vereinfacht, da der Rohrinhalt selbst nahezu unwesentlich wird. Aufgrund dieses kleinen Rohrinhaltes kann die Rohrleitung mehrfach genutzt werden, beispielsweise auch zum Tränken der Tiere oder für Medizinalgaben.

Bei einer entsprechend regelbaren Pumpe ist eine sehr genaue Feindosierung möglich.

Durch die Verringerung des Rohrinhaltes auf beispielsweise etwa 7 % gegenüber bekannten Anlagen sind nur noch sehr kleine Hilfstanks erforderlich, die entsprechend preisgünstig gegenüber derzeit gebräuchlichen Hilfstanks sind.

Aufgrund der sehr hohen Pumpgeschwindigkeit ist das Absetzen von Futterresten an den Rohrinnenwänden nahezu ausgeschlossen.

Gegebenenfalls kann die Fütterungsanlage in Verbindung mit entsprechenden Vorsatzgeräten auch als Wasserzuführungsleitung für eine Hochdruckreinigungsanlage verwendet werden, so daß die Stallreinigung mittels einer Hochdruckpistole erfolgen kann, die an die Rohrleitung der Fütterungsanlage anschließbar ist.

Gegenüber bekannten Anlagen, bei denen eine Futtersäule zwischen zwei Wassersäulen befindlich ist und hin und her verschoben wird, ist aufgrund der geringen Materialmenge eine derartig komplizierte Verfahrensführung nicht erforderlich.

## Patentansprüche

1. Flüssigfütterungsanlage, mit einer Rohrleitung, und mit Ventilen an den einzelnen Fütterungsstellen, und mit einer Pumpe, dadurch gekennzeichnet, daß die Pumpe als Hochdruckpumpe zur Erzeugung eines Druckes von wenigstens etwa 20 bar ausgestaltet ist und daß die Rohrleitung entsprechend druckfest ausgebildet ist und daß die Ventile ebenfalls entsprechend druckfest ausgestaltet sind, wobei die Rohrleitung einen Innendurchmesser von etwa 10-20 mm aufweist.

2. Flüssigfütterungsanlage nach Anspruch 1, gekennzeichnet durch eine Zerkleinerungseinrichtung für das Futter, die der Pumpe vorgeschaltet angeordnet ist.

3. Flüssigfütterungsanlage nach Anspruch 1 oder 2, dadurch gekennzeichnet, daß an der Fütterungsstelle dem zugeordneten Ventil nachgeschaltet ein Entspannungsbehälter vorgesehen ist, von dem ein Auslaß zum Futtertrog führt.

4. Flüssigfütterungsanlage nach einem der vorhergehenden Ansprüche, dadurch gekennzeichnet, daß die Rohrleitung aus Metall besteht.

5. Flüssigfütterungsanlage nach einem der vorhergehenden Ansprüche, dadurch gekennzeichnet, daß die Rohrleitung elektrisch beheizbar ist.
